# EUROPEAN PATENT SPECIFICATION

(11) **EP 4 117 102 B1**
(45) Date of publication and mention of the grant of the patent: **25.11.2026**
(21) Application number: 21800591.6
(22) Date of filing: 07.05.2021
(51) Int. Cl.: H01M 50/30, H01M 10/04, H01M 10/52, H01M 10/613, H01M 10/6572, H01M 50/105, H01M 50/609

(54) **DEGASSING APPARATUS AND DEGASSING METHOD**
ENTGASUNGSVORRICHTUNG UND ENTGASUNGSVERFAHREN
DISPOSITIF ET PROCÉDÉ DE DÉGAZAGE

(30) Priority: 07.05.2020 KR 20200054784
(43) Date of publication of application: 11.01.2023
(73) Proprietor: LG Energy Solution, Ltd., Seoul 07335 (KR)
(72) Inventor: JUNG, Kyu Sung, Daejeon 34122 (KR); HUH, Jun Hyeak, Daejeon 34122 (KR)
(74) Representative: Plasseraud IP
(86) International application number: PCT/KR2021/005718
(87) International publication number: WO 2021/225398

(56) References cited:
- CN-A- 107 403 945
- JP-A- 2016 162 991
- KR-A- 20120 060 707
- KR-A- 20120 060 707
- KR-A- 20170 087 250
- KR-A- 20170 087 250
- KR-A- 20170 104 205
- KR-A- 20190 055 585
- KR-B1- 100 709 865

## Description

### TECHNICAL FIELD

The present invention relates to a degassing apparatus, which discharges a gas generated therein while an activation process is performed after an electrode assembly and an electrolyte are inserted into a pouch, and a degassing method, and more particularly, to a degassing apparatus, in which at least one more of a lower mold and an upper mold, which press a pouch, are cooled to increase in viscosity of an electrolyte, thereby solving a problem, in which the electrolyte is discharged together when a gas is discharged, and a degassing method.

### BACKGROUND ART

Recently, with the rapid development of the electric, electronic, telecommunication and computer industries, the demand for high performance and high safety batteries is gradually increasing. Particularly, as electronic devices are becoming more compact, thinner and lighter, the demands for miniaturization and thinning of batteries is gradually increasing. In response to these demands, a lithium secondary battery with a high energy density is drawing the most attention.

Lithium batteries have advantages of long lifespan and large capacity and are widely used in portable electronic devices. The lithium batteries comprise lithium metal batteries and lithium ion batteries, which use a liquid electrolyte, and lithium polymer batteries using a polymer solid electrolyte depending on types of electrolytes.

In addition, lithium secondary batteries are classified into a prismatic battery using a prismatic can, a cylindrical battery using a cylindrical can, and a pouch-type battery using a pouch according to types of exteriors that seal an electrode assembly.

Among them, the pouch-type battery has advantages such as higher energy density per unit weight and volume, enables thinner and lighter battery, as well as a lower material cost as an exterior, and thus has been actively developed in recent years.

In addition, a method for manufacturing a pouch-type battery using the liquid electrolyte is as follows. First, a positive electrode and a negative electrode are manufactured, and then, a separator is disposed between the positive electrode and the negative electrode, and the positive electrode, the separator, and the negative electrode are stacked to manufacture an electrode assembly. Then, the electrode assembly is inserted together with the electrolyte into the inside of the pouch.

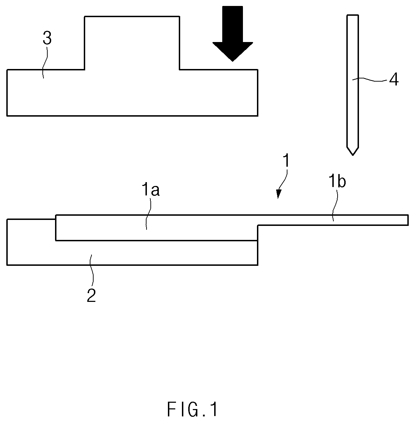

Here, as illustrated in FIG. 1, which simply shows a schematic shape of the degassing apparatus according to the related art, a pouch 1 is provided with a body part 1a, in which an electrode assembly and an electrolyte are embedded, and a gas pocket part 1b, which expands to one side from the body part 1a and of which the inside is opened to allow a gas to enter and exit. The gas pocket part 1b may be a portion at which a gas is collected during the degassing process, i.e., a portion, which is cut and removed when the degassing is completed. Heat and a pressure are applied to the cut portions of the gas pocket part 1b and the body part 1a to seal the cut portions.

After the electrode assembly is embedded first in the pouch 1, the electrolyte is injected into the pouch 1 to impregnate the electrode assembly into the electrolyte. When the electrolyte is injected as described above, an edge of an opening, into which the electrode assembly is inserted, is fused to be bonded, thereby sealing the pouch 1.

Also, after an aging process is performed for stabilization, a charging/discharging process is performed to activate the battery. During the charging/discharging process, since a gas is generated inside the pouch 1, degassing is performed to discharge the gas generated therein. After the degassing process is performed, the gas pocket part 1b is cut and discarded, and the cut portions of the gas pocket part 1b and the body part 1a are sealed to manufacture a secondary battery.

As illustrated in FIG. 1, in the degassing process, the body part 1a of the pouch 1 is seated on a lower mold 2, and then, an upper mold 3 descends onto the body part 1a to press the body part 1a. Here, a negative pressure is applied to the gas pocket part 1b after an end of a gas inhaler 4 is inserted into the gas pocket part 1b to suction the gas. Here, the gas existing in the body part 1a is pushed into the gas pocket part 1b by the pressure applied to the upper mold 3, and thus, the gas moving through the gas inhaler 4 is discharged from the gas pocket part 1b to the outside.

However, in the above-described degassing method, a portion of the electrolyte is discharged together with the gas according to the amount and viscosity of the electrolyte injected at the beginning, the descending pressure and descending speed of the upper mold 3, the suction force of the gas inhaler 4, and the like.

Also, when the amount of electrolyte within the body part 1a decreases below a certain level due to an increase in discharge amount of electrolyte increases due to the discharge of the gas, the lifespan of the secondary battery may be deteriorated, and also, when the discharge amount of gas is too small, the gas remaining in the body part 1a may cause swelling.

Documents KR 2017/0087250 A, KR 2012/0060707 A and KR 2019/0055585 A describe methods for manufacturing battery cells that involve degassing methods.

### DISCLOSURE OF THE INVENTION

### TECHNICAL PROBLEM

Accordingly, an object of the present invention is to provide a degassing apparatus and a degassing method, which are capable of blocking or minimizing a discharge of an electrolyte during a degassing process.

### TECHNICAL SOLUTION

The present invention for achieving the above object provides a degassing method according to claim 8 and a degassing apparatus according to claim 1.

A degassing method for a pouch that comprises a body part, on which an electrode assembly is mounted, and into which an electrolyte is injected, and a gas pocket part extending from the body part to one side, according to the present invention comprises: a pouch seating step (S10) of seating the body part on a lower mold; a pressing step (S30) of allowing an upper mold to descend so as to press the body part placed on the lower mold; and an inhalation step (S40) of suctioning a gas by inserting a gas inhaler into the gas pocket part, wherein, before starting the inhalation step (S40), a cooling step (S20) of cooling the body part is performed.

The cooling step (S20) may be started after the pouch seating step (S10) and before the pressing step (S30), and an end of the cooling step (S20) may be adjusted according to a change in cooling rate and viscosity of the electrolyte.

The inhalation step (S40) may be started simultaneously when the cooling step (S20) and the pressing step (S30) are performed. A negative pressure applied in the inhalation step (S40) may also be adjusted according to a change in viscosity of the electrolyte.

Thus, after the electrolyte is cooled to a temperature less than a predetermined temperature, the inhalation step (S40) may be started.

Also, in the cooling step (S20), a connection point between the body part and the gas pocket part may be more quickly cooled than other points. Here, in the cooling step (S20), the electrolyte may be cooled within a temperature range in which a change in physical state of the electrolyte does not occur.

In addition, the present invention relates to a degassing apparatus that is capable of performing the above-described degassing method. A degassing apparatus for a pouch that comprises a body part, on which an electrode assembly is mounted, and into which an electrolyte is injected, and a gas pocket part extending from the body part to one side, according to the present invention comprises: a lower mold placed on a bottom surface of the body part; and an upper mold descending to press a top surface of the body part placed on the lower mold, wherein at least one or more of the lower mold or the upper mold are cooled by a cooling member to cool the electrolyte injected into the body part when being in contact with the body part.

The degassing apparatus further comprises a gas inhaler that is inserted into the gas pocket part to suction a gas when the lower mold and the upper mold press the body part.

The cooling member comprises a Peltier element that is cooled when current is applied.

The Peltier element may be installed on the upper mold or the lower mold so that a surface of the upper mold or a surface of the lower mold, which is in contact with the body part, is more quickly cooled than other portions.

The Peltier element may be installed on the lower mold or installed on each of both the upper mold and the lower mold.

When the pouch is seated, the Peltier elements installed on the lower mold may be more densely installed at a boundary point between the body part and the gas pocket part than other points.

When a viscosity of the electrolyte before the cooling is 'X', the cooling device may be configured to cool the electrolyte until the viscosity of the electrolyte after the cooling becomes '1.5X' or more. For example, when a temperature of the electrolyte before the cooling is 20 degrees to 30 degrees, a temperature of the electrolyte after the cooling may be cooled to a temperature of 0 degree to 15 degrees by the cooling device. For example, if the viscosity is 4.37 Pa.s when a temperature of the electrolyte before the cooling is 25°C, the cooling may be performed up to a temperature at which the viscosity is 6.56 Pa.s or more.

The gas inhaler may suction a gas after the electrolyte is cooled to a predetermined reference temperature or more.

### ADVANTAGEOUS EFFECTS

In the present invention having the above configuration, since the cooling liquid is sufficiently cooled before the gas is suctioned to increase in viscosity, the movement of the gas to the gas pocket part may be suppressed as much as possible to prevent the electrolyte from being unnecessarily discharged.

In the present invention, since the cooling of the electrolyte is adjusted according to the change in cooling rate and viscosity of the electrolyte, the secondary batteries having various specifications may be applied.

In addition, in the present invention, the viscosity of the electrolyte at the specific point (particularly, the point that is close to the boundary with the gas pocket part) may further increase by cooling the specific point more rapidly, and thus, the amount and speed of the electrolyte moving to the gas pocket part may be delayed

In addition, the degassing apparatus according to the present invention may comprise the Peltier element that is cooled when the current is applied so that the cooling of the electrolyte is performed relatively simply and quickly through the control of the current, and the cooling may be more efficiently controlled according to the viscosity of the electrolyte.

Particularly, according to the present invention, since the Peltier element is used as the cooling member to more quickly reduce the temperature of the specific part, the movement of the electrolyte may be delayed more quickly and efficiently at the portion that serves as the passage when the gas and the electrolyte flow.

### BRIEF DESCRIPTION OF THE DRAWINGS

FIG. 1 is a schematic view illustrating a configuration of a degassing apparatus according to a related art.
FIG. 2 is a flowchart illustrating a degassing method according to the present invention.
FIG. 3 is a schematic view illustrating a configuration of a degassing apparatus according to the present invention.
FIG. 4 is a perspective view illustrating an internal configuration of a Peltier element comprised in the degassing apparatus according to the present invention.
FIG. 5 is a cross-sectional view illustrating a state in which an electrode assembly is inserted into a pouch.

### MODE FOR CARRYING OUT THE INVENTION

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention as limited by the pending claims.

The present invention provides a degassing apparatus for removing a gas in a pouch and a degassing method that is capable of performing degassing using the degassing apparatus according to embodiments, respectively. Thus, hereinafter, the embodiments of the present invention will be described in more detail with reference to the accompanying drawings.

### First embodiment

The present invention provides a degassing method for removing a gas in a pouch as a first embodiment.

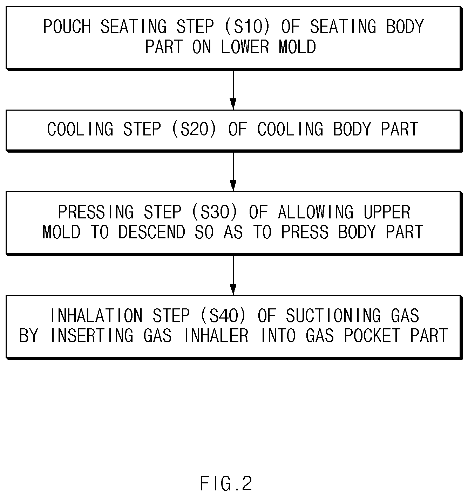

Referring to FIG. 2 illustrating a flowchart of the degassing method according to the present invention, the degassing method according to the present invention relates to a method for degassing a pouch 10 comprising a body part 10a, on which an electrode assembly is mounted, and into which an electrolyte is injected, and a gas pocket part 10b extending from the body part 10a to one side and comprises a pouch seating step (S10), a cooling step (S20), a pressing step (S30), and an inhalation step (S40).

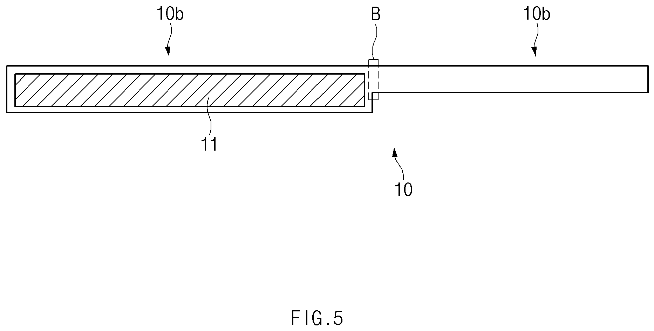

The pouch seating step (S10) is a step of seating the body part 10a on a lower mold 20. As illustrated in FIG. 5 that illustrates a state in which the electrode assembly 11 is inserted into the body part 10a, the pouch 10 is seated on the lower mold 20 after the electrolyte and the electrode assembly 11 are embedded in the body part 10a, and then, an aging process and an activation process are completely performed.

After the pouch seating step (S10), the pressing step (S30) is performed, and the cooling step (S20) is performed before the pressing step (S30) or during the pressing step (S30). That is, a start time of the cooling step (S20) may be different depending on whether a cooling device 50 is installed on the lower mold 20 or an upper mold 30.

In the cooling step (S20), the cooling device 50 installed (or connected to be heat-exchanged) on at least one of the lower mold 20 and the upper mold 30 or both the lower mold 20 and the upper mold 30 is configured to cool the body part 10a of the pouch 10. In the pressing step (S30), the upper mold 30 descends to press the body part 10a placed on the lower mold 20 at a predetermined pressure.

Here, if the cooling device 50 is mounted on or connected to the upper mold 30 before the body part 10a is cooled to a predetermined temperature, in the pressing step (S30), a contact step, in which a contact state is maintained for a certain time without a substantial pressure causing movement of a gas may be selectively performed so that a pressure is not applied to the body part 10a, but only heat exchange for the cooling is performed. Also, when the body part 10a is cooled to a predetermined temperature, the contact step may be released, and an appropriate pressure may be applied to cause the movement of the gas in the body part 10a.

After the pressing step (S30), the inhalation step (S40) is performed, and the cooling step (S20), in which the body part 10a is cooled to increase in viscosity of the electrolyte, may be performed before or after the pressing step (S30) before the inhalation step (S40).

In the inhalation step (S40), an end of the gas inhaler 40 is inserted into the gas pocket part 10b of the pouch 10 to apply a certain negative pressure, thereby suctioning the gas. Here, the gas in the body part 10a is in a state of moving to the gas pocket part 10b through the pressing step (S30), and the movement of the electrolyte of which the viscosity increases through the cooling step (S20) is suppressed in the pressing step (S30), and thus, an amount of electrolyte moving to the gas inhaler 40 is minimized. Therefore, the inhalation step (S40) is started after cooling the electrolyte so that the viscosity of the electrolyte sufficiently increases.

As described above, if before the inhalation step (S40), the cooling step (S20) is possible even after the pressing step (S30), but if the cooling device 50 is configured to be disposed on the lower mold 20, it is preferable that the cooling step (S20) is started after the pouch seating step (S10) and before the pressing step (S30) to increase in process rate.

Also, if the temperature of the electrolyte is sufficiently low in order to increase in process rate, or if instantaneous cooling is possible according to performance of the cooling device 50, the inhalation step (S40) may be started simultaneously when the cooling step (S20) and the pressing step (S30) are performed.

Also, the end of the cooling step (S20) may be adjusted according to the change in cooling rate and viscosity of the electrolyte, and the negative pressure acting in the inhalation step (S40) may be adjusted according to the change in viscosity of the electrolyte. However, in this embodiment, the inhalation step (S40) may be started after the electrolyte is cooled to a predetermined temperature or less, and it is preferable that, in the cooling step (S20), the electrolyte is cooled within a temperature range in which a change in physical state of the electrolyte does not occur.

Also, in the cooling step ( S20 ), a connection point between the body part 10a and the gas pocket part 10b may be cooled faster than other points. That is, as illustrated in FIG. 5, a temperature at a point B, at which a boundary between the body part 10a and the gas pocket part 10b of the pouch 10 is disposed, is further lowered instantaneously to relatively further increase in viscosity of the electrolyte disposed at the point, thereby more efficiently decreasing in amount of electrolyte moving to the gas pocket part 10b.

### Second embodiment

The present invention provides a degassing apparatus for removing a gas in a pouch as a second embodiment.

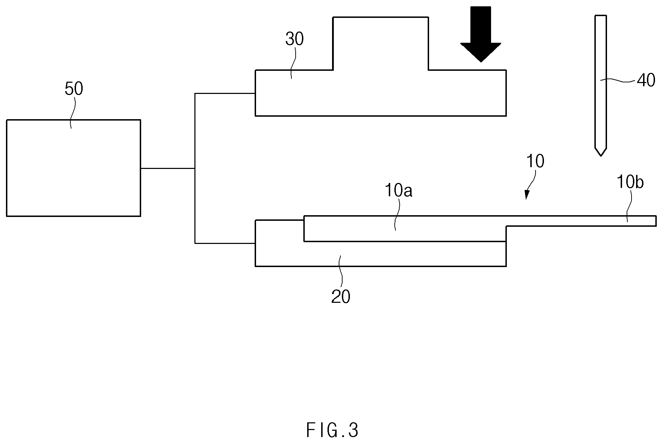

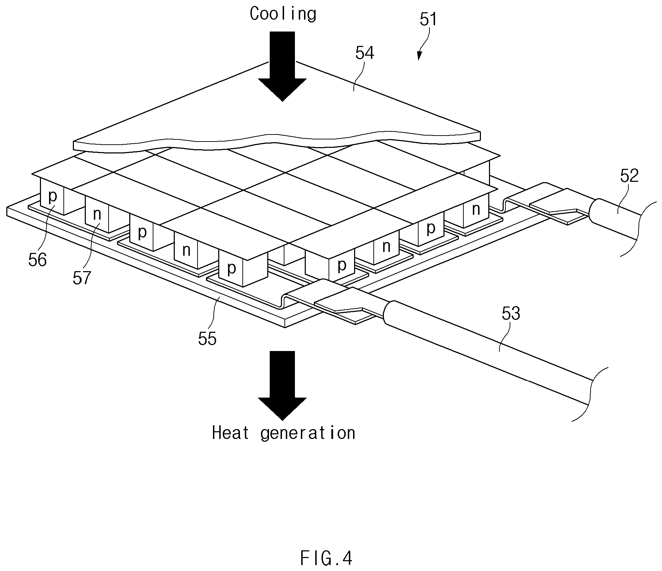

Referring to FIG. 3 that illustrates a simplified schematic view of the degassing apparatus according to the present invention and FIG. 4 that illustrates an internal configuration of a Peltier element 51 comprised in the degassing apparatus according to the present invention, the degassing apparatus according to the present invention additionally comprises a cooling device when compared to the degassing apparatus according to the related art.

That is, the degassing apparatus according to this embodiment is a degassing apparatus for a pouch 10 comprising a body part 10a, on which an electrode assembly 11 is mounted, and into which an electrolyte is injected, and a gas pocket part 10b extending from the body part 10a to one side. The degassing apparatus comprises a lower mold 20 placed on a bottom surface of the body part 10a and an upper mold 30 descending to press a top surface of the body part 10a placed on the lower mold 20. As illustrated in FIG. 3, at least one or more of the lower mold 20 or the upper mold 30 may be connected or coupled to a cooling member 50 so as to be heat-exchanged, or the cooling member is directly mounted on at least one or more of the lower mold 20 or the upper mold 30 to cool at least one or more of the lower mold 20 or the upper mold 30.

Thus, at least one or both of the upper mold 30 or the lower mold 20 cools the body part 10a when being in contact with the body part 10a to cool the electrolyte injected into the body part 10a, and the cooled electrolyte increases in viscosity in proportion to the decreasing temperature.

Furthermore, the degassing apparatus according to this embodiment further comprises a gas inhaler 40 that suctions a gas by inserting an end of the inhaler 40 into the gas pocket part 10b when the lower mold 20 and the upper mold 30 press the body part 10a.

The cooling member 50 is not particularly limited as long as the cooling member 50 is a device capable of rapidly performing the cooling, but in the present invention, the cooling member 50 comprises a Peltier element 51, in which the cooling is relatively easily controlled by adjusting an amount of current, and cooling performance is excellent, and particularly, instantaneous cooling is capable of being performed.

The Peltier element 51 _is configured to be cooled when the current is applied. That is, the Peltier element 51 is an element using a Peltier effect that generates a temperature difference by generating and absorbing heat at both sides at the same time when a potential difference occurs. The Peltier element 51 is configured to have a cooling effect by taking energy away from one metal in order that electrons move between two metals, in which the potential difference occurs. In the Peltier element 51 according to the present invention, a p-type semiconductor 56 and an n-type semiconductor 57 are disposed between two plates 54 and 55, and when current is applied to the p-type semiconductor 56 and the n-type semiconductor 57 through cables 52, 53, energy of one plate 54 is taken away to be cooled.

A plurality of Peltier elements 51 may be directly attached to the lower mold 20 or the upper mold 30 so as to be cooled or may be heat-exchanged with the lower mold 20 or the upper mold 30 through a refrigerant or the like so as to be cooled.

However, in order to improve the cooling efficiency, it is more preferable that a method in which the plate 54, in which the cooling is performed, of the Peltier element 51 is directly attached to the upper mold 30 or the lower mold 20.

Furthermore, the degassing apparatus according to this embodiment may be configured so that a specific portion of the body part 10a is cooled more rapidly. That is, the plurality of the Peltier elements 51 may be arranged at regular intervals on a surface of the upper mold 30 or a surface of the lower mold 20, which is in contact with the body part 10a. Here, the Peltier element having a larger output at a specific portion B may be disposed to more quickly cool the specific portion of the body part 10a than other portions, or the Peltier elements 51 are disposed more densely at the specific portion to more quickly cool the specific portion (for example, a portion 'B' in FIG. 5) of the body part 10a.

The Peltier element 51 may be installed only on any one of the lower mold 20 and the upper mold 30, but it is preferable to be installed on both the upper mold 30 and the lower mold 20 so as to perform the rapid cooling. Also, if the Peltier element 51 has to be installed on only one place, it is more preferable to be installed on the lower mold 20 having a relatively longer contact time with the body part 10a than to be installed on the upper mold 30.

In this embodiment, when the viscosity of the electrolyte before the cooling is 'X', the cooling device 50 may be configured to cool the electrolyte until the viscosity of the electrolyte after the cooling becomes '1.5X' or more.

For example, when a temperature of the electrolyte before the cooling is 20 degrees to 30 degrees, a temperature of the electrolyte after the cooling may be cooled to a temperature of 0 degree to 15 degrees by the cooling device 50. For example, if the viscosity is 4.37 Pa.s when a temperature of the electrolyte before the cooling is 25°C, the cooling may be performed up to a specific temperature at which the viscosity is 6.56 Pa.s or more.

For reference, the electrolyte may have a viscosity of 6.80 Pa.s at a temperature of 10°C. That is, when the electrolyte is cooled by a temperature of 15°C (from 20°C to 15°C), the viscosity increases by approximately 56%. When the electrolyte is pressed, since the movement of the electrolyte solution having the increasing viscosity is reduced when compared to a case in which the temperature is relatively high. Thus, the movement of the electrolyte to the gas pocket part 10b of the pouch 10 may be prevented.

In the present invention, the gas inhaler 40 may suction a gas after the temperature of the electrolyte is cooled to a predetermined reference temperature or more, and the end of the gas inhaler 40 may be inserted into the gas pocket part 10b before cooling the electrolyte. However, it is preferable to be configured so that the end of the gas inhaler 40 is inserted after cooling the electrolyte as much as possible.

In the present invention having the above configuration, since the cooling liquid is sufficiently cooled before the gas is suctioned to increase in viscosity, the movement of the gas to the gas pocket part 10b may be suppressed as much as possible to prevent the electrolyte from being unnecessarily discharged.

In the present invention, since the cooling of the electrolyte is adjusted according to the change in cooling rate and viscosity of the electrolyte, the secondary batteries having various specifications may be applied.

In addition, in the present invention, the viscosity of the electrolyte at the specific point (particularly, the point that is close to the boundary with the gas pocket part 10b) may further increase by cooling the specific point more rapidly, and thus, the amount and speed of the electrolyte moving to the gas pocket part 10b may be delayed

In addition, the degassing apparatus according to the present invention comprises the Peltier element 51 that is cooled when the current is applied so that the cooling of the electrolyte is performed relatively simply and quickly through the control of the current, and the cooling is more efficiently controlled according to the viscosity of the electrolyte.

While the embodiments of the present invention have been described with reference to the specific embodiments, it will be apparent to those skilled in the art that various changes and modifications may be made without departing from the scope of the invention as defined in the following claims.

## Claims

1. A degassing apparatus for a pouch (10) that comprises a body part (10a), on which an electrode assembly (11) is mounted, and into which an electrolyte is injected, and a gas pocket part (10b) extending from the body part (10a) to one side, the degassing apparatus comprising:
a lower mold (20) placed on a bottom surface of the body part (10a); and
an upper mold (30) descending to press a top surface of the body part (10a) placed on the lower mold (20),
wherein at least one of the lower mold (20) and the upper mold (30) are cooled by a cooling member (50) to cool the electrolyte injected into the body part (10a) when being in contact with the body part (10a),
**characterized in that** the degassing apparatus further comprises a gas inhaler (40) that is inserted into the gas pocket part (10b) to suction a gas when the lower mold (20) and the upper mold (30) press the body part (10a), and
wherein the cooling member (50) comprises a Peltier element (51) that is cooled when current is applied.

2. The degassing apparatus of claim **1,** wherein the Peltier element (51) is installed on the upper mold (30) or the lower mold (20) so that a surface of the upper mold or a surface of the lower mold, which is in contact with the body part (10a), is more quickly cooled than other portions.

3. The degassing apparatus of claim **2,** wherein the Peltier element (51) is installed on the lower mold (20) or installed on each of both the upper mold (20) and the lower mold (30) .

4. The degassing apparatus of claim 3, wherein, when the pouch (10) is seated, the Peltier elements (51) installed on the lower mold (20) are more densely installed at a boundary point between the body part (10a) and the gas pocket part (10b) than other points.

5. The degassing apparatus of claim 1, wherein, when a viscosity of the electrolyte before the cooling is 'X', the cooling device (50) is configured to cool the electrolyte until the viscosity of the electrolyte after the cooling becomes '1.5X' or more.

6. The degassing apparatus of claim 3, wherein a temperature of the electrolyte before the cooling is 20 degrees to 30 degrees, and a temperature of the electrolyte after cooled by the cooling device (50) is 0 degree to 15 degrees.

7. A degassing method for a pouch (10) that comprises a body part (10a), on which an electrode assembly (11) is mounted, and into which an electrolyte is injected, and a gas pocket part (10b) extending from the body part (10a) to one side, the degassing method comprising:
a pouch seating step (S10) of seating the body part (10a) on a lower mold (20);
a pressing step (S30) of allowing an upper mold (30) to descend so as to press the body part (10a) placed on the lower mold (20); and
an inhalation step (S40) of suctioning a gas by inserting a gas inhaler (40) into the gas pocket part (10b),
wherein, before starting the inhalation step (S40), a cooling step (S20) of cooling the body part (10a) is performed by a cooling member (50) comprising a Peltier element (51) that is cooled when current is applied.

8. The degassing method of claim 7, wherein the cooling step (S20) is started after the pouch seating step (S10) and before the pressing step (S30).

9. The degassing method of claim 8, wherein the inhalation step (S40) is started during the cooling step (S20) and the pressing step (S30).

10. The degassing method of claim 9, wherein, after the electrolyte is cooled to a temperature less than a predetermined temperature, the inhalation step (S40) is started.

11. The degassing method of claim 8, wherein, in the cooling step (S20), a connection point between the body part (10a) and the gas pocket part (10b) is more quickly cooled than other points.

12. The degassing method of claim 8, wherein, in the cooling step (S20), the electrolyte is cooled within a temperature range in which a change in physical state of the electrolyte does not occur.

13. The degassing method of claim 7, wherein the inhalation step (S40) is started after the electrolyte is cooled to a predetermined reference temperature.

## Patentansprüche

1. Entgasungsvorrichtung für einen Beutel (10), der ein Körperteil (10a), auf dem eine Elektrodenbaugruppe (11) montiert ist und in den ein Elektrolyt eingespritzt ist, und ein Gastaschenteil (10b) umfasst, das sich von dem Körperteil (10a) zu einer Seite hin erstreckt, wobei die Entgasungsvorrichtung Folgendes umfasst:
eine untere Form (20), die auf einer Unterseite des Körperteils (10a) angeordnet ist; und
eine obere Form (30), die sich absenkt, um eine Oberseite des auf der unteren Form (20) angeordneten Körperteils (10a) zu pressen,
wobei mindestens eine der unteren Form (20) und der oberen Form (30) durch ein Kühlelement (50) gekühlt wird, um den in das Körperteil (10a) eingespritzten Elektrolyten zu kühlen, wenn sie mit dem Körperteil (10a) in Kontakt steht,
**dadurch gekennzeichnet, dass** die Entgasungsvorrichtung ferner einen Gasabsauger (40) umfasst, der in das Gastaschenteil (10b) eingeführt ist, um ein Gas abzusaugen, wenn die untere Form (20) und die obere Form (30) das Körperteil (10a) pressen, und
wobei das Kühlelement (50) ein Peltier-Element (51) umfasst, das gekühlt wird, wenn Strom angelegt wird.

2. Entgasungsvorrichtung nach Anspruch 1, wobei das Peltier-Element (51) an der oberen Form (30) oder der unteren Form (20) so installiert ist, dass eine Oberfläche der oberen Form oder eine Oberfläche der unteren Form, die mit dem Körperteil (10a) in Kontakt steht, schneller als andere Abschnitte gekühlt wird.

3. Entgasungsvorrichtung nach Anspruch 2, wobei das Peltier-Element (51) an der unteren Form (20) installiert ist oder an jeder von sowohl der oberen Form (20) als auch der unteren Form (30) installiert ist.

4. Entgasungsvorrichtung nach Anspruch 3, wobei, wenn der Beutel (10) eingesetzt ist, die an der unteren Form (20) installierten Peltier-Elemente (51) an einem Grenzpunkt zwischen dem Körperteil (10a) und dem Gastaschenteil (10b) dichter installiert sind als an anderen Punkten.

5. Entgasungsvorrichtung nach Anspruch 1, wobei, wenn eine Viskosität des Elektrolyten vor dem Kühlen "X" ist, die Kühlvorrichtung (50) so konfiguriert ist, dass sie den Elektrolyten kühlt, bis die Viskosität des Elektrolyten nach dem Kühlen "1,5X" oder mehr beträgt.

6. Entgasungsvorrichtung nach Anspruch 3, wobei eine Temperatur des Elektrolyten vor dem Kühlen 20 Grad bis 30 Grad beträgt und eine Temperatur des Elektrolyten nach dem Kühlen durch die Kühlvorrichtung (50) 0 Grad bis 15 Grad beträgt.

7. Entgasungsverfahren für einen Beutel (10), der ein Körperteil (10a), auf dem eine Elektrodenbaugruppe (11) montiert ist und in den ein Elektrolyt eingespritzt ist, und ein Gastaschenteil (10b) umfasst, das sich von dem Körperteil (10a) zu einer Seite hin erstreckt, wobei das Entgasungsverfahren Folgendes umfasst:
einen Beuteleinsetzschritt (S10) des Einsetzens des Körperteils (10a) auf eine untere Form (20);
einen Pressschritt (S30) des Ermöglichens, dass eine obere Form (30) abgesenkt wird, um das auf der unteren Form (20) angeordnete Körperteil (10a) zu pressen; und
einen Absaugschritt (S40) des Absaugens eines Gases durch Einführen eines Gasabsaugers (40) in das Gastaschenteil (10b),
wobei vor dem Starten des Absaugschritts (S40) ein Kühlschritt (S20) des Kühlens des Körperteils (10a) durch ein Kühlelement (50) durchgeführt wird, das ein Peltier-Element (51) umfasst, das gekühlt wird, wenn Strom angelegt wird.

8. Entgasungsverfahren nach Anspruch 7, wobei der Kühlschritt (S20) nach dem Beuteleinsetzschritt (S10) und vor dem Pressschritt (S30) gestartet wird.

9. Entgasungsverfahren nach Anspruch 8, wobei der Absaugschritt (S40) während des Kühlschritts (S20) und des Pressschritts (S30) gestartet wird.

10. Entgasungsverfahren nach Anspruch 9, wobei nach dem Kühlen des Elektrolyten auf eine Temperatur unter einer vorbestimmten Temperatur der Absaugschritt (S40) gestartet wird.

11. Entgasungsverfahren nach Anspruch 8, wobei im Kühlschritt (S20) ein Verbindungspunkt zwischen dem Körperteil (10a) und dem Gastaschenteil (10b) schneller gekühlt wird als andere Punkte.

12. Entgasungsverfahren nach Anspruch 8, wobei im Kühlschritt (S20) der Elektrolyt innerhalb eines Temperaturbereichs gekühlt wird, in dem keine Änderung des physikalischen Zustands des Elektrolyten auftritt.

13. Entgasungsverfahren nach Anspruch 7, wobei der Absaugschritt (S40) gestartet wird, nachdem der Elektrolyt auf eine vorbestimmte Referenztemperatur gekühlt wurde.

## Revendications

1. Appareil de dégazage pour une poche (10) qui comprend une partie de corps (10a), sur laquelle est monté un ensemble d'électrodes (11) et dans laquelle est injecté un électrolyte, et une partie de poche de gaz (10b) s'étendant depuis la partie de corps (10a) vers un côté, l'appareil de dégazage comprenant :
un moule inférieur (20) placé sur une surface inférieure de la partie de corps (10a) ; et
un moule supérieur (30) descendant pour presser une surface supérieure de la partie de corps (10a) placée sur le moule inférieur (20),
dans lequel au moins l'un parmi le moule inférieur (20) et le moule supérieur (30) est refroidi par un élément de refroidissement (50) pour refroidir l'électrolyte injecté dans la partie de corps (10a) lors d'un contact avec la partie de corps (10a),
**caractérisé en ce que** l'appareil de dégazage comprend en outre un aspirateur de gaz (40) qui est inséré dans la partie de poche de gaz (10b) pour aspirer un gaz lorsque le moule inférieur (20) et le moule supérieur (30) pressent la partie de corps (10a), et
dans lequel l'élément de refroidissement (50) comprend un élément Peltier (51) qui est refroidi lorsqu'un courant est appliqué.

2. Appareil de dégazage selon la revendication 1, dans lequel l'élément Peltier (51) est installé sur le moule supérieur (30) ou le moule inférieur (20) de sorte qu'une surface du moule supérieur ou une surface du moule inférieur, qui est en contact avec la partie de corps (10a), soit refroidie plus rapidement que d'autres portions.

3. Appareil de dégazage selon la revendication 2, dans lequel l'élément Peltier (51) est installé sur le moule inférieur (20) ou installé sur chacun du moule supérieur (20) et du moule inférieur (30).

4. Appareil de dégazage selon la revendication 3, dans lequel, lorsque la poche (10) est positionnée, les éléments Peltier (51) installés sur le moule inférieur (20) sont installés de manière plus dense au niveau d'un point de frontière entre la partie de corps (10a) et la partie de poche de gaz (10b) qu'en d'autres points.

5. Appareil de dégazage selon la revendication 1, dans lequel, lorsqu'une viscosité de l'électrolyte avant le refroidissement est « X », le dispositif de refroidissement (50) est configuré pour refroidir l'électrolyte jusqu'à ce que la viscosité de l'électrolyte après le refroidissement devienne « 1,5X » ou plus.

6. Appareil de dégazage selon la revendication 3, dans lequel une température de l'électrolyte avant le refroidissement est de 20 degrés à 30 degrés, et une température de l'électrolyte après avoir été refroidi par le dispositif de refroidissement (50) est de 0 degré à 15 degrés.

7. Procédé de dégazage pour une poche (10) qui comprend une partie de corps (10a), sur laquelle est monté un ensemble d'électrodes (11) et dans laquelle est injecté un électrolyte, et une partie de poche de gaz (10b) s'étendant depuis la partie de corps (10a) vers un côté, le procédé de dégazage comprenant :
une étape de positionnement de poche (S10) consistant à positionner la partie de corps (10a) sur un moule inférieur (20) ;
une étape de pressage (S30) consistant à laisser descendre un moule supérieur (30) de manière à presser la partie de corps (10a) placée sur le moule inférieur (20) ; et
une étape d'aspiration (S40) consistant à aspirer un gaz en insérant un aspirateur de gaz (40) dans la partie de poche de gaz (10b),
dans lequel, avant de commencer l'étape d'aspiration (S40), une étape de refroidissement (S20) consistant à refroidir la partie de corps (10a) est effectuée par un élément de refroidissement (50) comprenant un élément Peltier (51) qui est refroidi lorsqu'un courant est appliqué.

8. Procédé de dégazage selon la revendication 7, dans lequel l'étape de refroidissement (S20) est commencée après l'étape de positionnement de poche (S10) et avant l'étape de pressage (S30).

9. Procédé de dégazage selon la revendication 8, dans lequel l'étape d'aspiration (S40) est commencée pendant l'étape de refroidissement (S20) et l'étape de pressage (S30).

10. Procédé de dégazage selon la revendication 9, dans lequel, après que l'électrolyte est refroidi à une température inférieure à une température prédéterminée, l'étape d'aspiration (S40) est commencée.

11. Procédé de dégazage selon la revendication 8, dans lequel, à l'étape de refroidissement (S20), un point de liaison entre la partie de corps (10a) et la partie de poche de gaz (10b) est refroidi plus rapidement que d'autres points.

12. Procédé de dégazage selon la revendication 8, dans lequel, à l'étape de refroidissement (S20), l'électrolyte est refroidi dans une plage de températures dans laquelle un changement d'état physique de l'électrolyte ne se produit pas.

13. Procédé de dégazage selon la revendication 7, dans lequel l'étape d'aspiration (S40) est commencée après que l'électrolyte est refroidi à une température de référence prédéterminée.
